# EUROPEAN PATENT APPLICATION

(11) **EP 4 725 680 A1**
(43) Date of publication of application: **15.04.2026**
(21) Application number: 24205622.4
(22) Date of filing: 09.10.2024
(51) Int. Cl.: B29C 64/112, B29C 64/393, B33Y 10/00, B33Y 30/00

(54) **METHOD FOR PRINTING A THREE-DIMENSIONAL OBJECT AND A PRINTER THEREFOR**

(71) Applicant: Canon Production Printing Holding B.V., 5914 HH Venlo (NL)
(72) Inventor: Mestrom, Paulus M.A., Venlo (NL); Callewaert-Doré, Tom W.J., Venlo (NL); Filippovych, Kateryna, Venlo (NL)
(74) Representative: Canon Production Printing IP Department

(57) **Abstract**

Method and printing system for printing layers of at least one resin (25) by means of a printer (1). The printer (1) comprises an inkjet printing assembly which has a plurality of nozzles and configured to jet the layers of the at least one resin (25) in order to form a three-dimensional object, and to jet wrapping material (14) to enclose the three-dimensional object during printing of the three-dimensional object, and a radiation curing system (16) for radiation curing the at least one jetted resin. The method comprises the steps of jetting multiple layers of the wrapping material for enclosing multiple layers of the at least one resin to be jetted, jetting multiple layers of the at least one resin until a total thickness of the multiple jetted layers is sufficiently thick to let the at least one resin comprised in the multiple layers flow strongly enough to cover a full area enclosed by the already jetted multiple layers of the wrapping material, and curing the multiple jetted layers of the at least one resin altogether by the radiation curing system.

## Description

### FIELD OF THE INVENTION

The invention relates to a method for printing layers of at least one resin by means of a printer, the printer comprising an inkjet printing assembly which has a plurality of nozzles and configured to jet the layers of the at least one resin in order to form a three-dimensional object, and to jet wrapping material to enclose the three-dimensional object during printing of the three-dimensional object, and a radiation curing system for radiation curing the at least one jetted resin.

The printer may hereinafter also be referred to as a printing system.

The inkjet printing assembly may comprise one or more print heads.

The term "perpendicular" may hereinafter also be referred to as the term "orthogonal". The term "nozzle" may be also referred to as "print element".

The term "3D" is meant to be equivalent to the term "three-dimensional".

Hereinafter the term "voxel" is meant to be a three-dimensional counterpart to a pixel. It represents a value on a regular grid in a three-dimensional space.

In this application a resin is a viscous substance of synthetic origin that is convertible into polymers. The resin is fluid during printing and solidifies under influence of radiation.

### BACKGROUND OF THE INVENTION

The accuracy of a multi-material 3D inkjet printer depends strongly on the nozzle performance of the printer. Possible issues include nozzle failure, a varying droplet size across different nozzles and a wrong jetting direction of certain nozzles. When printing dental implants using UV curable resins, the accuracy can be improved by using wrapping material to constrain the resin flow before the resins are cured with UV light. Ideally, the resins flow out strongly enough, so that they fill up the complete area bounded by the wrapping material even when certain nozzles are failing or jetting wrongly. The technical problem is how to increase the resin flow without reducing the productivity of the printer and how to ensure that the resin flows out to a flat layer.

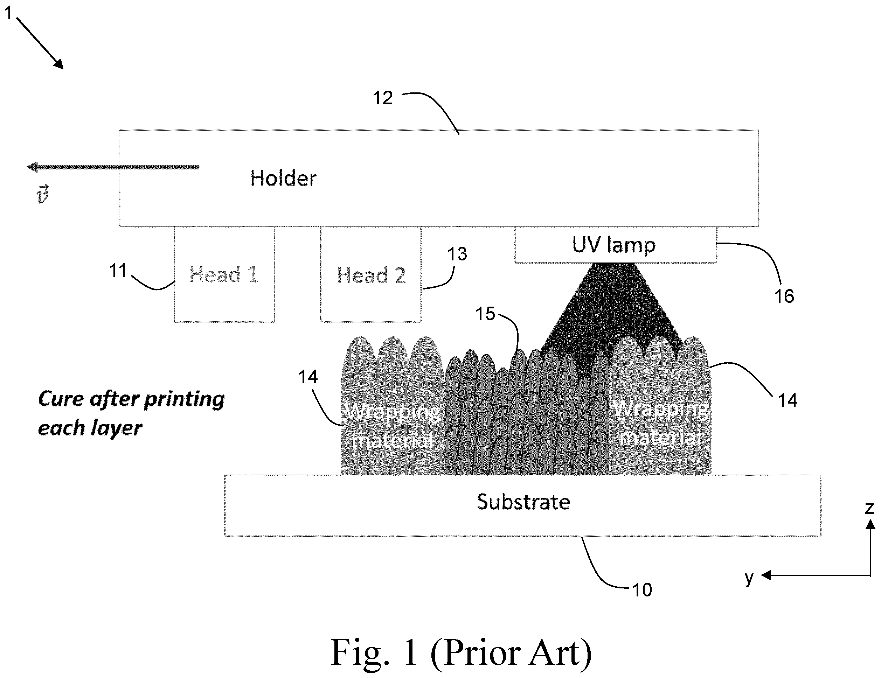

Fig. 1 shows a known inkjet printer 1 in which a method according to the prior art is applied. The inkjet printer 1 comprises a holder 12 for holding the print heads 11, 13 for respectively ejecting the wrapping material 14 and the resin 15, and a radiation lamp 16 for providing radiation curing light, preferably a UV lamp. The print heads 11, 13 are provided with at least one array of nozzles which have apertures in order to respectively eject the wrapping material 14 and the resin 15. The at least one array of nozzles extends in a direction orthogonal to the directions z and y. The holder 12 and the radiation lamp 16 are mounted on a carriage (not shown) which traverses over a print surface 10 in a y direction in an xy plane. On the print surface a substrate 10 is provided on which the layers of resin 15 and wrapping material 14 are intended to be jetted.

Fig. 1 is a schematic illustration of a 3D inkjet printer with a curing strategy according to the prior art. After each jetted layer of resin curing takes place by the curing lamp 16. Fig. 1 shows three printed resin layers. A velocity vector v^{→} indicates a relative velocity between the printhead holder 12 and the substrate 10. Each of the three printed resin layers is immediately cured after being jetted.

The resin flow can be enhanced for each printed layer by increasing the time before curing for each pass. However, this approach increases the printing time of the dental elements like dental implants. The invention may be implemented in a multi-material 3D inkjet printer that is used to print dental implants or other objects that require high geometric reproduction fidelity.

An object of the invention is to provide a method and a printer for printing 3D objects with viscous materials, for example for printing dental implants preferably with UV curable resins.

### SUMMARY OF THE INVENTION

According to the present invention this object is achieved by the method according to the invention, wherein the method comprising the steps of
a) jetting multiple layers of the wrapping material for enclosing multiple layers of the at least one resin to be jetted,
b) jetting multiple layers of the at least one resin until a total thickness of the multiple jetted layers is sufficiently thick to let the at least one resin comprised in the multiple layers flow strongly enough to cover a full area enclosed by the already jetted multiple layers of the wrapping material,
c) curing the multiple jetted layers of the at least one resin altogether by the radiation curing system, and
d) repeating steps a) - c) until the three-dimensional object is completely printed, wherein step a) and step b) are performed under a condition that a height of the jetted wrapping material at any time minimally supersedes a height of the multiple layers of the already jetted at least one resin.

The print is only cured when the liquid resin layer is sufficiently thick, so that the resins flow strongly enough to cover the full area enclosed by the wrapping material and the effect of failing nozzles is minimized. In addition, the wrapping material grows slightly faster than the resins to get the flattest resin surfaces. By doing so, the object of the present invention is achieved.

In a 3D inkjet printing process with UV curable resins a geometry of the dental implants can be controlled by using wrapping material to prevent the resins to flow away before being cured. When using wrapping material the dental resins do not need to be cured as quickly as possible to get the right geometry. Instead, according to the present invention the resin flow is increased, so that the resin distributes itself over the area that is enclosed by the wrapping material. In this way, the wrapping material is optimally used and the impact of failing nozzles is reduced. The resin flow is increased by only curing a liquid resin layer that is sufficiently thick. For example, this could be done by first printing several layers (e.g. 4 or 8 layers) and then curing them altogether. This cycle is repeated for the next layers. The increase of the resin flow is based on the physical principle that thicker liquid layers flow out faster.

Because the resin layers are cured not before the resin layers together are sufficiently thick, the resin flow is increased without increasing the printing time. The increased resin flow improves the accuracy of the 3D print process when using wrapping material to encapsulate the printed object and may be used to control the layer heights.

The radiation curing system may use UV curing, electron beam curing of infrared curing. A radiation curing system which uses UV curing is preferred.

According to the present invention less curing steps are involved which strengthens printed dental implants. After all, in every curing step the liquid resin has to be fixated to the print. This fixation process influences the strength of the dental implants. Less curing steps imply less interfaces that have to be fixated, resulting in stronger dental implants.

According to the present invention the wrapping material is printed before the resin. Ideally, the height of the wrapping material matches the height of the resin surface after printing the resin layer, so that a top surface of the entire print is kept flat. In this way, the print gap between the print head and the top surface can stay small enough to jet the droplets with sufficient accuracy on the print.

According to an embodiment the method comprises the step of determining a number of jetted multiple layers of wrapping material in step a) and a number of jetted multiple layers of the at least one resin in step b) in such a way that at any time the height of the wrapping material matches a height of a surface of the multiple jetted layers of the at least one resin as closely as possible. Since the layer thickness of different materials may be different, the number of printed layers is varied for each material. The different materials are printed in such a way that the height of the wrapping material matches the height of the resin surface as closely as possible. The matching procedure should be done carefully because a strong resin flow does not guarantee a flat resin surface. Preferably, when the resin shrinks during curing, the wrapping material grows slightly faster than the cured resin material to end up with the flattest resin surfaces. By doing so, the accuracy of the print process is increased because a smaller print gap may be chosen and no corrections due to curvatures on the print need to be taken into account.

According to a further embodiment the method comprises the step of decreasing a coverage of the surface of the multiple jetted layers of the at least one resin for subsequent last or first layers of the number of jetted multiple layers of the at least one resin in step b). Not all layers of the at least one resin need to completely cover the area enclosed by the wrapping material. Part of the pixels could be left empty, because the resin will flow anyway. In this way, the height of the resin layers can even more closely be matched to the height of the wrapping material. For example, first 3 resin layers at 100% coverage are printed and then one more resin layer is printed at 50% coverage. Then the jetted resin layers are cured with the radiation curing system.

According to an embodiment the method comprises the step of creating voxels of the three-dimensional object and indicating per layer of the at least one resin to be jetted that a total number of voxels has to be printed or a lower number of voxels of the layer has to be printed by leaving space between the respective voxels, wherein an amount of space is determined by the number and the coverage of jetted multiple layers of the at least one resin.

According to an embodiment the method comprises the step of leaving voxels empty between the resin and the wrapping material. By doing so, the resin will be less polluted by the wrapping material and the printed objects need to be polished less.

The increase of the resin flow according to the present invention gives more control over the height of each printed layer. Not all pixels in each layer need to be printed because empty pixels may be filled up via resin flow from the filled pixels. Said additional control in layer height can be used for example in the height matching procedure of the wrapping material and the resin as described hereabove.

Furthermore, the option to let empty pixels to be filled up via resin flow may be used to decrease the chemical reactivity between the different inks in the 3D inkjet printing process. If the pixels that are supposed to be filled by different materials are separated by some empty pixels, the two inks do not meet each other immediately when said two inks are still hot, but said two inks meet at a later time when they are both cooler. The temperature reduction could significantly reduce several unwanted chemical reactions at the interface of two materials.

The present invention further relates to a printing system comprising an inkjet printing assembly which has a plurality of nozzles and configured to jet multiple layers of at least one resin in order to form a three-dimensional object, and to jet wrapping material to enclose the three-dimensional object during printing of the three-dimensional object, a radiation curing system for radiation curing the at least one jetted resin, and a print controller for controlling the printing of the three-dimensional object, wherein the print controller is configured to perform the steps of the method according to the present invention.

The present invention further relates to a computer program product, including computer readable code embodied on a computer readable medium, said computer readable code comprising instructions for executing the steps of a method according to the present invention by means of a printing system according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
Fig. 1 is a printing system in which a method according to the prior art is applied;
Fig. 2 shows the same printing system in which a method according to the present invention is applied;
Fig. 3(a) - 3(d) show embodiments of wrapping a to be printed 3D object in wrapping material according to the present invention;
Fig. 4 is a flow diagram of the method according to the present invention; and
Fig. 5 schematically shows a non-transitory software medium according to the invention.

### DETAILED DESCRIPTION OF EMBODIMENTS

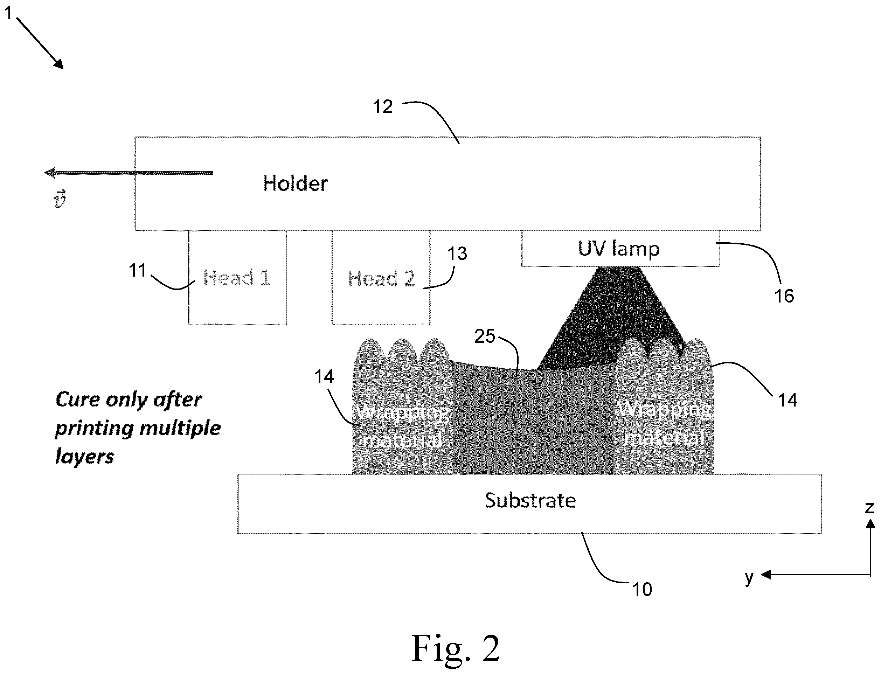

Fig. 2 shows an inkjet printer 1 in which the present invention is applicable. The inkjet printer 1 comprises a holder 12 for holding the print heads 11, 13 for respectively ejecting the wrapping material 14 and the resin 25, and a radiation lamp 16 for providing radiation curing light, preferably a UV lamp. The print heads 11, 13 are provided with at least one array of nozzles which have apertures in order to respectively eject the wrapping material 14 and the resin 25. The at least one array of nozzles extends in a direction orthogonal to the directions z and y. The holder 12 and the radiation lamp 16 are mounted on a carriage (not shown) which bi-directionally traverses over a print surface 10 in a y direction in an xy plane. On the print surface a substrate 10 is provided on which the layers of resin 25 and wrapping material 14 are intended to be jetted. The substrate 10 may be previously cured layers of ink.

The printer 1 comprises a print controller (not shown) comprising boxes with electronics for controlling the printheads 11, 13. The print controller is connected to a digital network for receiving print jobs submitted by users. The print controller comprises a Central Processing Unit (CPU), a Graphical Processor Unit (GPU), a Random Access Memory (RAM), a Read Only Memory (ROM), a network unit, an interface unit, a user interface for user input at the printer 1, a hard disk (HD) and an image processing unit such as a Raster Image Processor (RIP). The aforementioned units are interconnected through a bus system. However, the print controller may also be a distributed controller. The user interface may be provided with user input and display means for receiving specifications of the object which define the object to be printed with a particular resolution. However the specifications of the particular resolution may also be part of a submitted print job to be received by the print controller via the digital network.

The CPU controls the printing system 1 in accordance with control programs stored in the ROM or on the HD and a local user interface panel. The CPU also controls the image processing unit and the GPU. The ROM stores programs and data such as boot program, set-up program, various set-up data or the like, which are to be read out and executed by the CPU. The hard disk is an example of a non-volatile storage unit for storing and saving programs and data which make the CPU execute a print process to be described later. The hard disk also comprises an area for saving the data of externally submitted print jobs. The hard disk may also comprise models for 3D objects that may be used according to the present invention. The programs and data on the HD are read out onto the RAM by the CPU as needed. The RAM has an area for temporarily storing the programs and data read out from the ROM and HD by the CPU, and a work area which is used by the CPU to execute various processes. The interface unit connects the controller to client devices and to the printing system 1. The network unit connects the print controller to the network and is designed to provide communication with workstations and with other devices reachable via the network. The image processing unit may be implemented as a software component running on an operation system of the controller or as a firmware program, for example embodied in a field-programmable gate array (FPGA) or an application-specific integrated circuit (ASIC). The image processing unit has functions for reading, editing, interpreting and rasterizing the print job data. Said print job data contains image data to be printed i.e. pixel or voxel data of the object to be printed, described in a Page Description Language or the like, image processing attributes and print settings like a number of layers to be printed on top of each other, a desired resolution, a desired ink material, a desired resolution per desired ink material, a desired ink material per desired resolution, etc.

Fig. 2 is a schematic illustration of a 3D inkjet printer with a curing strategy according to the present invention. Curing takes place by the curing lamp 16 after printing multiple layers of resin 25. In Fig. 2 the printed resin layers 25 are flown out between the wrapping material walls 14 and have a substantially flat top surface. A velocity vector v^{→} indicates a relative velocity between the printhead holder 12 and the substrate 10. The surface level of the printed resin 25 is slightly lower in height in the z direction than the height of already jetted wrapping material 14 in the z direction.

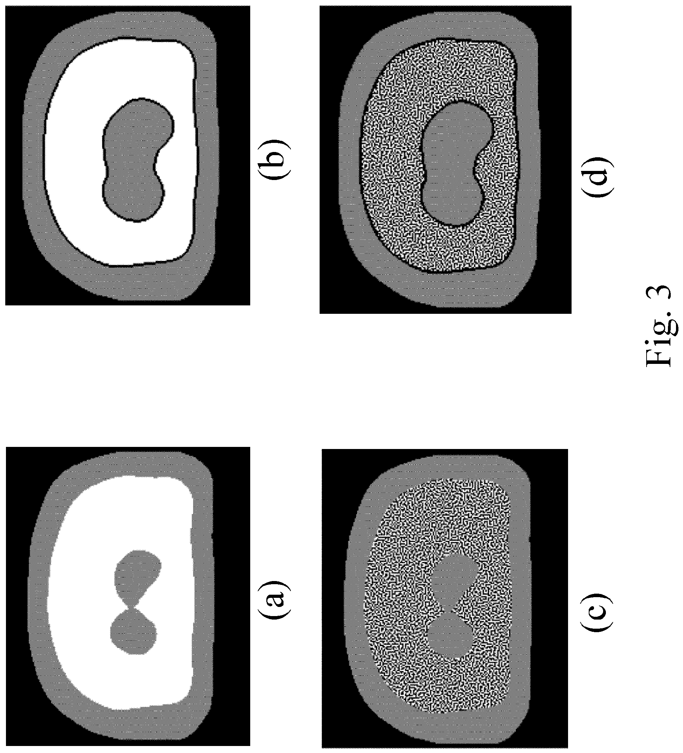

Fig. 3(a) - 3(d) show embodiments of wrapping a to be printed 3D object in wrapping material according to the present invention. According to an embodiment the method comprises the step of creating voxels of the 3D object and indicating per layer of the at least one resin to be jetted that a lower number of voxels of the layer have to be printed by leaving space between the respective voxels, wherein an amount of space is determined by the number and the coverage of jetted multiple layers of the at least one resin.

Fig. 3(a) shows a slice of the 3D object that is wrapped in wrapping material. The black pixels are empty, the grey pixels are filled by wrapping material and the white pixels are filled by the resin.

Fig. 3(b) shows the same slice, but now there is a gap of a small amount of empty pixels between the wrapping material and the resin. In this way, the wrapping material and resin drops are not jetted into each other. If there was no gap, wrapping material drops and resin drops would be jetted on top of each other due to misalignments of the printheads and due to the fact that the drops are typically larger than the pixel size. The small amount of empty pixels may be one, two, three or four empty pixels. By doing so, the resin will be less polluted by the wrapping material. The printed 3D object thus needs to be polished less in a polishing post-processing step.

Fig. 3(c) shows the same slice, but now the empty pixels are spread out over the area that is supposed to be filled by the resin. If this layer is printed on top of wet layers of resin, the ink will redistribute itself over the full area.

Fig. 3(d) is a combination of Fig. 3(b) and Fig. 3(c).

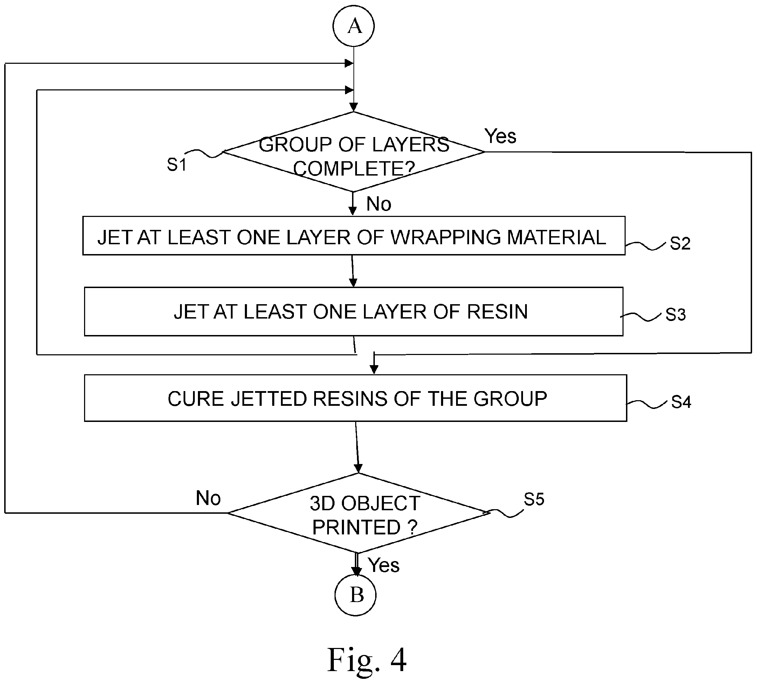

Fig. 4 shows an embodiment of the method of the present invention for printing a 3D object in a number of layers by means of a printing system according to the present invention. The total number of layers may be predetermined based on a desired or specified height of the 3D object. The method starts in a starting point A which leads to a first step S1.

In the first step S1 it is checked if a group of resin layers for the 3D object is completed before a next curing step have been printed. A group of layers is intended to be cured only after the last layer of the group has been printed. The group of layers depends mainly on a required resolution along the z direction. A smaller group of layer leads to a higher resolution and also to a higher degree of curing. However, the group of layers should be large enough for the ink flow having flattened out the surface. So, an optimum of the number of layers to be grouped may be calculated. If the group of resin layers is completed, the method goes to a second step S2. If not so, the method proceeds to a fourth step S4.

In the second step S2 the inkjet printing assembly jets wrapping material in order to enclose at least one area where the at least one resin which is intended to be jetted.

The wrapping material may be a material which solidifies quickly when it cools down. In this case, the wrapping material and the resin can be printed in the same pass. Then the wrapping material is not cured in the same way as the resin material. Otherwise, the wrapping and resin layers cannot be printed simultaneously. The wrapping material may be a material which does not need to be cured at all or the wrapping material may be of such a kind that when curing such a wrapping material nothing happens to the wrapping material.

In a third step S3 the inkjet printing assembly jets the at least one resin in order to completely cover the at least one area enclosed by the wrapping material. The method returns to the first step S1.

In each layer, the height of the wrapping material is chosen such that it closely matches the height of the resin after having flowed out as explained hereinbefore. In this way, the print gap, which is defined as the gap between the nozzle plate and the surface on which the drops are jetted, can stay small enough to jet the droplets with sufficient accuracy on the print.

In the fourth step S4 the radiation curing system is radiation curing the at least one jetted resin in the group of layers.

In a fifth step S5 it is checked if the 3D object has been completely printed and cured. If so, the method ends in an end point B. If not so, the method return to the first step S1.

The method according to the present invention may be applied to print dental objects like permanent dental implants, with UV curable resins.

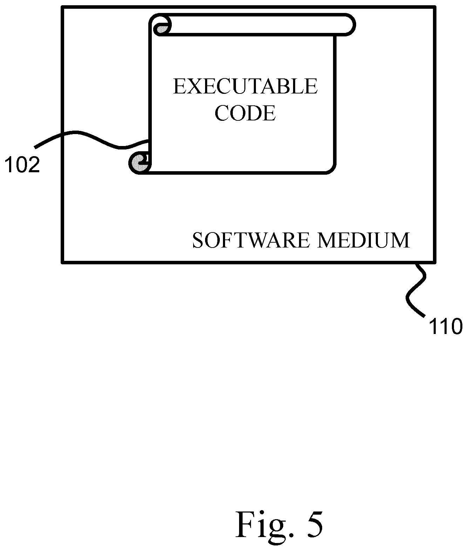

Fig. 5 schematically shows a non-transitory software medium 110 according to the invention. The software medium 110 comprises executable code 102 configured to, when executed, perform the method according to the invention, e.g. as described with respect to either the printer shown in Fig. 2 or the method shown in Fig. 4 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A method for printing layers of at least one resin by means of a printer, the printer comprising an inkjet printing assembly which has a plurality of nozzles and configured to jet the layers of the at least one resin in order to form a three-dimensional object, and to jet wrapping material to enclose the three-dimensional object during printing of the three-dimensional object, and a radiation curing system for radiation curing the at least one jetted resin, the method comprising the steps of
a) jetting multiple layers of the wrapping material for enclosing multiple layers of the at least one resin to be jetted,
b) jetting multiple layers of the at least one resin until a total thickness of the multiple jetted layers is sufficiently thick to let the at least one resin comprised in the multiple layers flow strongly enough to cover a full area enclosed by the already jetted multiple layers of the wrapping material,
c) curing the multiple jetted layers of the at least one resin altogether by the radiation curing system, and
d) repeating steps a) - c) until the three-dimensional object is completely printed, wherein step a) and step b) are performed under a condition that a height of the jetted wrapping material at any time minimally supersedes a height of the multiple layers of the already jetted at least one resin.

2. A method according to claim 1, wherein the method comprises the step of determining a number of jetted multiple layers of wrapping material in step a) and a number of jetted multiple layers of the at least one resin in step b) in such a way that at any time the height of the wrapping material matches a height of a surface of the multiple jetted layers of the at least one resin as closely as possible.

3. A method according to claim 2, wherein the method comprises the step of decreasing a coverage of the surface of the multiple jetted layers of the at least one resin for subsequent last or first layers of the number of jetted multiple layers of the at least one resin in step b).

4. A method according to claim 3, wherein the method comprises the step of creating voxels of the three-dimensional object and indicating per layer of the at least one resin to be jetted that a total number of voxels has to be printed or a lower number of voxels of the layer has to be printed by leaving space between the respective voxels, wherein an amount of space is determined by the number and the coverage of jetted multiple layers of the at least one resin.

5. A method according to any of the preceding claims, wherein the method comprises the step of leaving voxels empty between the resin and the wrapping material.

6. A printing system comprising an inkjet printing assembly which has a plurality of nozzles configured to jet multiple layers of at least one resin in order to form a three-dimensional object and to jet wrapping material to enclose the three-dimensional object during printing of the three-dimensional object, a radiation curing system for radiation curing the at least one jetted resin, and a print controller for controlling the printing of the three-dimensional object, wherein the print controller is configured to perform the steps of the method according to any one of the previous claims.

7. A computer program product, including computer readable code embodied on a computer readable medium, said computer readable code comprising instructions for executing the steps of a method according to any of the claims 1 - 5 by means of a printing system according to claim 6.
